# EUROPÄISCHE PATENTSCHRIFT

(11) **EP 1 307 359 B1**
(45) Veröffentlichungstag und Bekanntmachung des Hinweises auf die Patenterteilung: **01.02.2006**
(21) Anmeldenummer: 01962564.9
(22) Anmeldetag: 18.07.2001
(51) Int. Cl.: B60R 21/01

(54) **VORRICHTUNG ZUR DETEKTION DER INSTALLATION EINES KINDERSITZES**
DEVICE FOR DETECTING THE FITTING OF A CHILD'S SEAT
DISPOSITIF PERMETTANT DE DETECTER SI UN SIEGE POUR ENFANT EST INSTALLE

(30) Priorität: 28.07.2000 DE 10036933
(43) Veröffentlichungstag der Anmeldung: 07.05.2003
(73) Patentinhaber: ROBERT BOSCH GMBH, 70442 Stuttgart (DE)
(72) Erfinder: HAAS, Lothar, 90574 Rosstal (DE); HIRT, Adam, 90614 Ammerdorf (DE)
(86) Internationale Anmeldenummer: PCT/DE2001/002703
(87) Internationale Veröffentlichungsnummer: WO 2002/009981

(56) Entgegenhaltungen:
- EP-A- 0 650 869
- WO-A-96/26527
- DE-A- 19 827 057
- US-A- 5 515 933
- US-A- 5 690 356

## Beschreibung

Die Erfindung betrifft eine Vorrichtung zur Detektion der Installation eines Kindersitzes gemäß Anspruch 1.

Eine gattungsgemäβe vorrichtung ist aus dem nächst ligenden Stand der Technik, DE 198 27 057 A, bekannt.

Bei Fahrzeugen, die mit Airbag auf der Beifahrerseite oder im Fond versehen sind, stellt sich das Problem, daß, wenn dort ein Kindersitz installiert ist, eine Auslösung des Airbag zu Verletzungen des sich im Kindersitz befindlichen Kindes führen kann. Daher ist es wünschenswert, die Installation eines Kindersitzes auf dem betreffenden Fahrzeugsitz automatisch zu detektieren.

### Vorteile der Erfindung

Erfindungsgemäß wird eine Vorrichtung zur Detektion der Installation eines Kindersitzes, insbesondere auf einem Fahrzeugsitz, mit einem festen Teil und einem beweglichen Mechanismus bereitgestellt, bei welcher der feste Teil ein Schaltelement mit zwei Schaltzuständen und Mittel zur Bildung eines Betätigungsfelds für das Schaltelement aufweist und der bewegliche Mechanismus durch Installation eines Kindersitzes von einer ersten Lage in eine zweite Lage bewegbar ist und dadurch eine Beeinflussung des Betätigungsfelds erzielbar ist, so daß das Schaltelement den Schaltzustand wechselt.

Die Vorrichtung hat zum Vorteil, daß das Schaltelement durch den beweglichen Mechanismus zuverlässig ausgelöst werden kann, wobei der bewegliche Mechanismus recht einfach gestaltet ist. Insbesondere sind Feld-Bildungsmittel und Schaltelement an dem festen Teil angeordnet, können somit zuverlässig und in einfacher Weise aufeinander werden und sind im Betrieb keinerlei Bewegungen unterworfen. Mittels des Schaltelements läßt sich ein Signal schalten, das den Fahrer an die Installation des Kindersitzes erinnert, oder aber der Airbag-Steuerung eine Information zuführen, durch welche der betreffende Airbag deaktiviert wird.

Besonders vorteilhaft ist eine Realisierung, bei welcher das Feld ein Magnetfeld und das Schaltelement ein Magnetschaltelement ist. Ein Magnetfeld läßt sich in besonders einfacher Weise durch einen Permanentmagneten erzeugen, also ohne jegliche Energiezufuhr. Auch ist der Schaltvorgang durch die Verwendung eines Magnetschalters besonders schnell und zuverlässig.

Vorteilhafterweise kann zur Beeinflussung des Betätigungsmagnetfelds ein Abschirmmittel, insbesondere ein Blech aus Weicheisen, vorgesehen sein, das sich in der ersten Lage in einem Bereich zwischen dem Magnetschaltelement und dem Magneten befindet und sich in der zweiten Lage mindestens teilweise außerhalb des Bereichs befindet. Das Abschirmmittel schließt in der ersten Lage das Betätigungsmagnetfeld kurz. Aufgrund der Leitfähigkeit besonders geeignet hierzu ist ein Blech aus Weicheisen. Ein Abschirmmittel für das Betätigungsmagnetfeld stellt eine besonders einfache und zuverlässige Art der Betätigung des Magnetschalters dar.

Das Magnetschaltelement kann einen sogenannten Reed-Schalter aufweisen. Auch eine Realisierung mittels einer Hall-Sonde ist denkbar.

Alternativ kann das Betätigungsfeld auch ein elektromagnetisches Feld sein, wie es z.B. durch eine Lichtquelle erzeugt wird. Dann weist das Schaltelement einen Strahlungsdetektor, z.B. ein Fotoelement auf.

Um den Schalter wieder in seine Ausgangsschaltstellung zurückzubringen, wenn der Kindersitz entfernt ist, können Mittel zum Rückstellen des beweglichen Mechanismus in die erste Lage vorgesehen sein.

Bei einer Variante gemäß der Erfindung ist der bewegliche Mechanismus am festen Teil drehbar um einen Drehpunkt gelagert, und das Abschirmmittel ist an dem beweglichen Mechanismus befestigt. Bei dieser Variante wird das Abschirmmittel, wenn der Kindersitz installiert wird, von der ersten Lage, in der es das Betätigungsmagnetfeld vom Magnetschalter abschirmt, in die zweite Lage geschwenkt, in der es das Betätigungsmagnetfeld mindestens teilweise freigibt.

Um eine besonders wirksame Abschirmung zu erzielen, kann bei dieser Variante das Abschirmmittel an mindestens einer Seite derart geformt sein, daß es in der ersten Lage um einen Pol des Magneten mindestens teilweise herumgreift.

Wenn eine Flanke des Abschirmmittels zum Drehpunkt hin abgeschrägt ist, kann ein besonders genaues Schalten des Magnetschalters erreicht werden.

Vorteilhaft ist es ferner, wenn der feste Teil an der Unterseite einen Schmutzabfuhrschlitz aufweist, in welchen das Abschirmmittel mindestens teilweise eingreift. Dann kann nämlich Schmutz, der im Laufe der Zeit in die Vorrichtung eindringt und an der Unterseite sammelt, durch das sich bewegende Abschirmmittel aus der Vorrichtung herausbefördert werden.

Die Rückstellmittel können bei der ersten Variante eine Drehfeder aufweisen, die koaxial mit dem beweglichen Mechanismus angeordnet ist

Bei einer weiteren Variante weist der bewegliche Mechanismus einen drehbaren Teil und einen verschieblichen Teil auf, wobei der drehbare Teil drehbar um einen Drehpunkt am festen Teil gelagert ist und wobei der verschiebliche Teil das Abschirmmittel aufweist und der verschiebliche Teil mittels eines Nockens, der sich an dem drehbaren Teil befindet, von der ersten Lage in die zweite Lage verschiebbar ist. Diese Variante läßt sich besonders platzsparend realisieren.

Bei dies Variante können die Rückstellmittel die auf den verschieblichen Teil wirkt, und/oder eine Drehfeder, die koaxial mit dem drehbaren Teil angeordnet ist und auf diesen wirkt, aufweisen.

Bei beiden Varianten kann der feste Teil zwei Gehäusehälften aufweisen, die vorzugsweise mit einer Anzahl von Fixierstiften und zugeordneten Öffnungen zur radialen Fixierung der beiden Gehäusehälften zueinander versehen sind.

Ferner können die beiden Gehäusehälften. Verdrängungsnoppen und zugeordnete Öffnungen zur axialen Fixierung der Gehäusehälften zueinander aufweisen.

Erfindungsgemäß kann das Magnetschaltelement zum Schalten eines Signals für eine Airbag-Steuerung ausgelegt sein. Damit läßt sich eine automatische Abschaltung der Airbag-Steuerung im Falle der Detektion einer Kindersitz-Installation realisieren.

Besonders vorteilhaft ist es, wenn der bewegliche Mechanismus über einen Hebel verfügt, der durch eine Arretiereinrichtung des Kindersitzes bewegbar ist. Eine derartige Arretiereinrichtung ist bei bestimmten Kindersitzen ohnehin vorhanden, so daß sich eine Modifikation solcher Kindersitze erübrigt.

Von Vorteil ist auch, wenn Mittel zum Befestigen in dem Fahrzeugsitz an einer Traverse, insbesondere gemäß der Norm ISO 13216-1 ("ISOFix"'), vorgesehen sind.

Die Erfindung umfaßt ferner einen Fahrzeugsitz mit mindestens einer der vorstehend beschriebenen Detektionsvorrichtungen.

### Zeichnung

Die Erfindung wird anhand zweier Ausführungsbeispiele und der Zeichnung beschrieben. In der Zeichnung zeigen:
- Fig. 1, 2: Teilansichten der ersten Variante;
- Fig. 3: ein Schnittbild zur ersten Variante;
- Fig. 4: den beweglichen Mechanismus der ersten Variante;
- Fig. 5: eine Außenansicht von unten auf das Gehäuse gemäß der ersten Variante;
- Fig. 6: ein Schnittbild zur zweiten Variante;
- Fig. 7: eine Einzelheit des Gehäuses; und
- Fig. 8: ein Schema zum Funktionsprinzip.

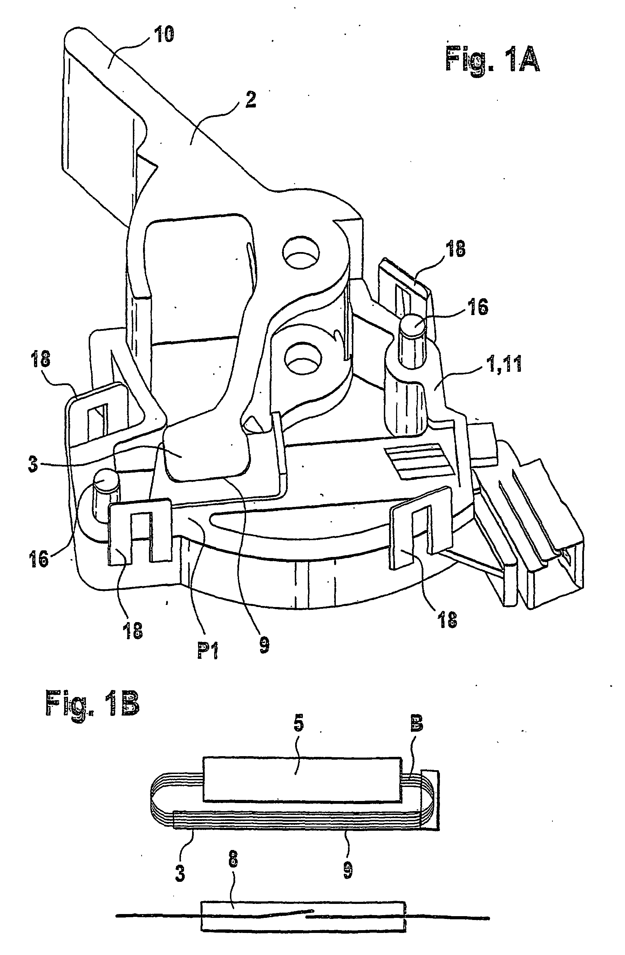

Die perspektivische Darstellung der Fig. 1A zeigt die erste Variante gemäß der Erfindung bei einer abgenommenen Gehäusehälfte 12 des festen Teils 1. Der bewegliche Mechanismus 2, 3 mit Abschirmmittel 3 und Hebel 10 ist in der ersten Gehäusehälfte 11 angeordnet, im Drehpunkt 7 drehbar gelagert und befindet sich in der ersten Lage P1. In der ersten Lage P1 befindet sich das Abschirmmittel 3, ein Blech aus Weicheisen, im Bereich 9 zwischen Magnet 5 und Magnetschaltelement 8 (Fig. 1B) und schirmt somit das Betätigungsmagnetfeld 5 ab, so daß das Magnetschaltelement 8 nicht vom Magnetfeld B des Magneten 5 durchsetzt wird. Der Schaltzustand des Magnetschaltelements 8 entspricht der Situation "kein Kindersitz installiert". Als Magnetschaltelement 8 wird ein Reed-Schalter eingesetzt.

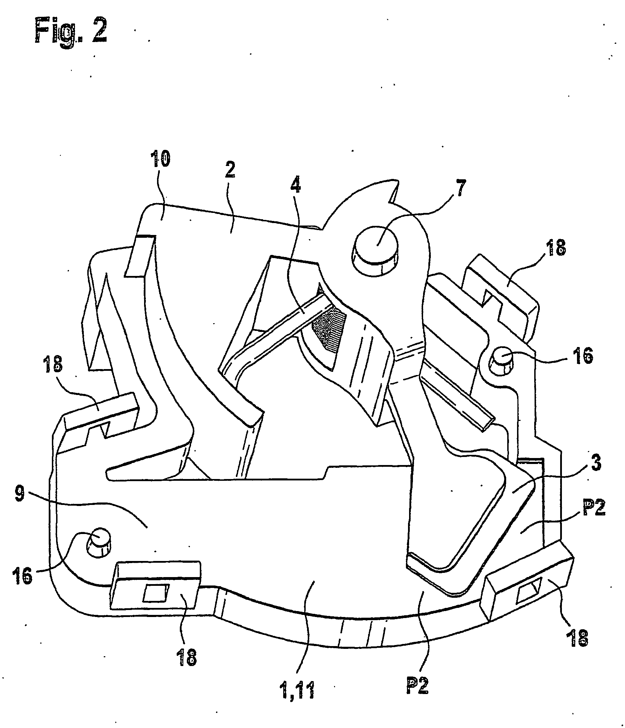

Bei der perspektivischen Darstellung der Fig. 2 ist der bewegliche Mechanismus 2, 3 in der zweiten Lage P2. Hierbei ist das Abschirmblech 3 aus dem Bereich 9 zwischen Magnet 5 und Magnetschaltelement 8 herausgeschwenkt, und zwar gegen die Rückstellkraft des Rückstellmittels 4, das hier als Drehfeder aus gestaltet ist. Die Drehfeder 4 ist koaxial zum beweglichen Mechanismus 2, 3 angeordnet.

Die maximale Auslenkung des Hebels 10 wird durch einen Anschlag an der Gehäusehälfte 11 begrenzt. Das Magnetfeld kann somit das Magnetschaltelement durchsetzen, wodurch letzteres seinen Schaltzustand wechselt. Hierdurch wird ein elektrisches Signal geschaltet, das der Situation "Kindersitz installiert" entspricht.

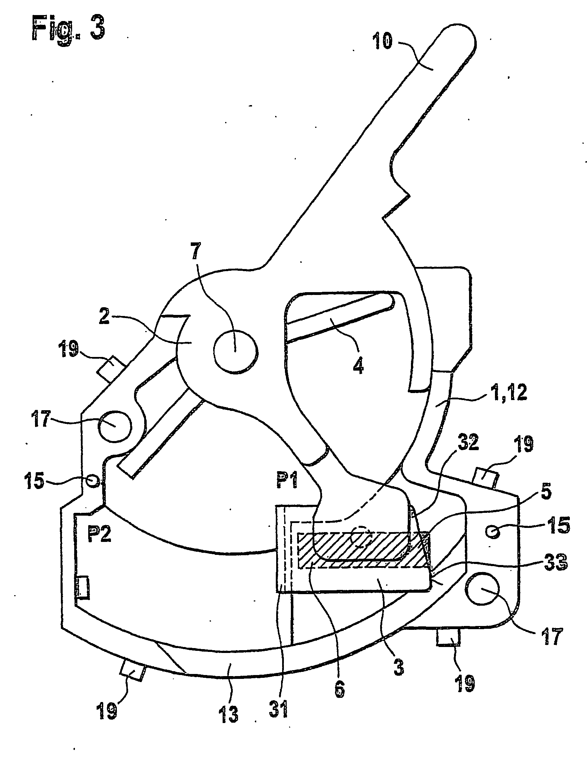

Fig. 3 zeigt weitere Einzelheiten der Detektionsvorrichtung gemäß der ersten Variante. Die Darstellung zeigt einen. Schnitt in der Lage P1 gemäß Fig. 1, jedoch von der rückwärtigen Seite betrachtet. Im Hintergrund befindet sich die Gehäusehälfte 12. Das Abschirmblech 3 auf einer Stirnseite 31 nach hinten (in die Zeichenebene) umgebogen, so daß es in der Lage P1 den Magneten 5 an dessen einem Pol 6 umgibt. Hierdurch wird eine besonders wirksame Abschirmung des Magnetfelds erzielt. Damit das Magnetschaltelement beim Herausschwenken des Abschirmblechs 3 besonders genau schaltet, ist dessen rückwärtige Flanke 32 zum Drehpunkt 7 hin abgeschrägt.

Zwischen beiden Gehäusehälften 11, 12 ist an der Unterseite ein Schlitz 13 vorgesehen, durch welchen Verschmutzungen, die in das Gehäuse eindringen, abgeführt werden. Der Reinigungseffekt wird noch dadurch verstärkt, daß das Abschirmblech 3 mit einer Ecke 33 in diesen Schlitz 13 eingreift und bei Bewegung zwischen den beiden Lagen P1, P2 in diesem entlangläuft.

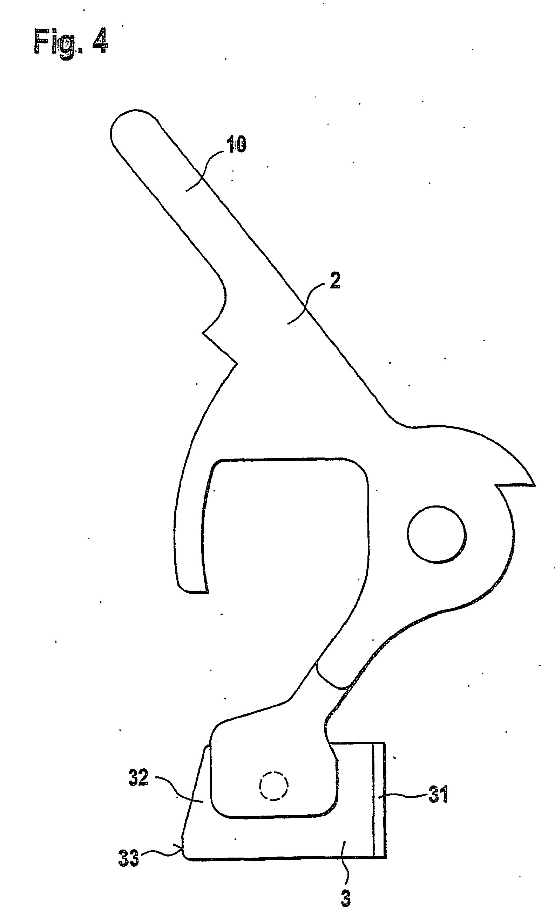

Fig. 4 zeigt den beweglichen Mechanismus 2, 3, 10 der ersten Variante in der Rückansicht Die Seite 31 des Abschirmblechs ist nach vom abgewinkelt.

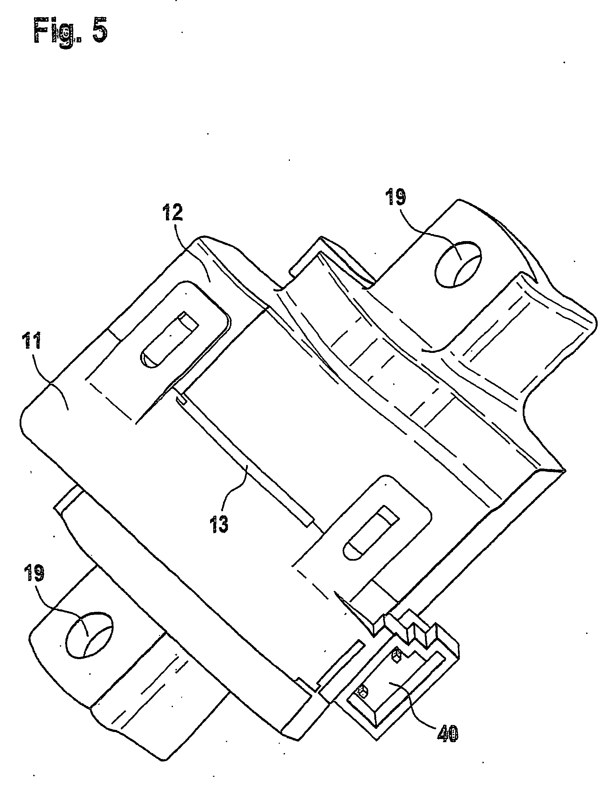

In der Außenansicht von unten gemäß Fig. 5 ist der Schlitz 13 dargestellt. Des weiteren ist ein elektrischer Anschluß 40 vorgesehen, über welchen das Magnetschaltelement 8 an die Airbag-Steuerung angeschlossen ist.

Bei der beschriebenen ersten Variante der Erfindung wird über den Hebel 10 der bewegliche Mechanismus 2, 3 gedreht, wodurch das Abschirmmittel 3 aus dem Betätigungsmagnetfeld herausgeschwenkt wird.

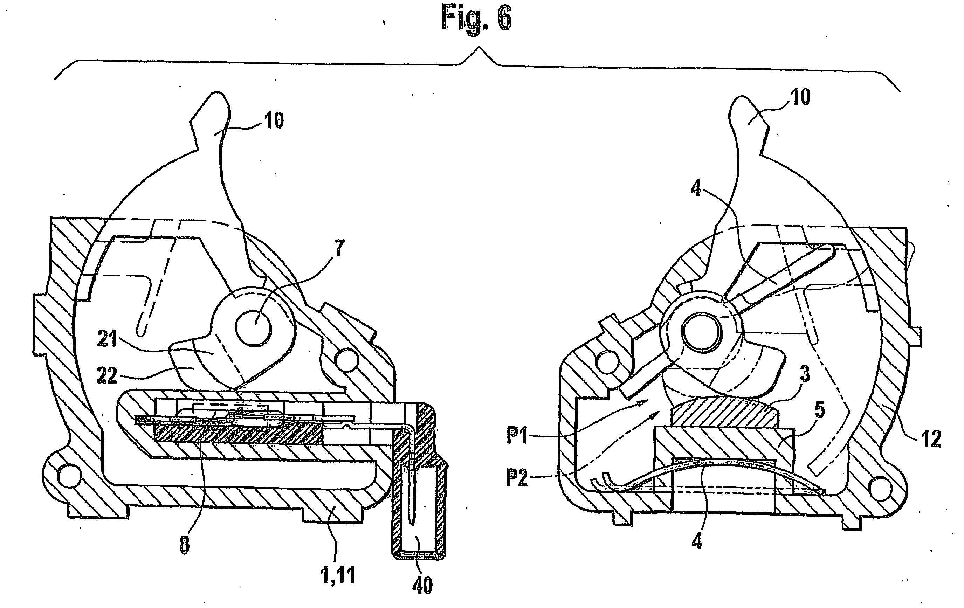

In der zweiten Variante der Erfindung gemäß Fig. 6 weist der bewegliche Mechanismus 2, 3 einen drehbaren Teil 2 sowie einen verschieblichen Teil 3 auf. Der drehbare Teil 2 umfaßt den Hebel 10 und einen Nocken 21, der auf das Abschirmblech 3 wirkt, welches auf dem verschieblichen Teil 3 gelagert ist. Die Drehbewegung des Hebels 10 wird also in eine translatorische Bewegung des Abschirmblechs 3 umgesetzt. In Ruhestellung wird das Abschirmblech 3 durch die Bügelfeder 4 in den Bereich 9 zwischen Magnet 5 und Magnetschalter 8 gedrückt. Zusätzlich ist auch hier eine Drehfeder als Rückstellmittel 4 für den drehbaren Teil 2 vorgesehen.

Bei Auslenkung durch den Hebel 10 wird das Abschirmblech 3 gegen die Federspannung aus der Lage P1 nach unten aus dem Betätigungsmagnetfeld in die Lage P2 gedrückt.

Der Nocken 21 hat eine Steuerkurve 22, die ein besonders schnelles Schalten des Magnetschaltelements 8 gewährleistet.

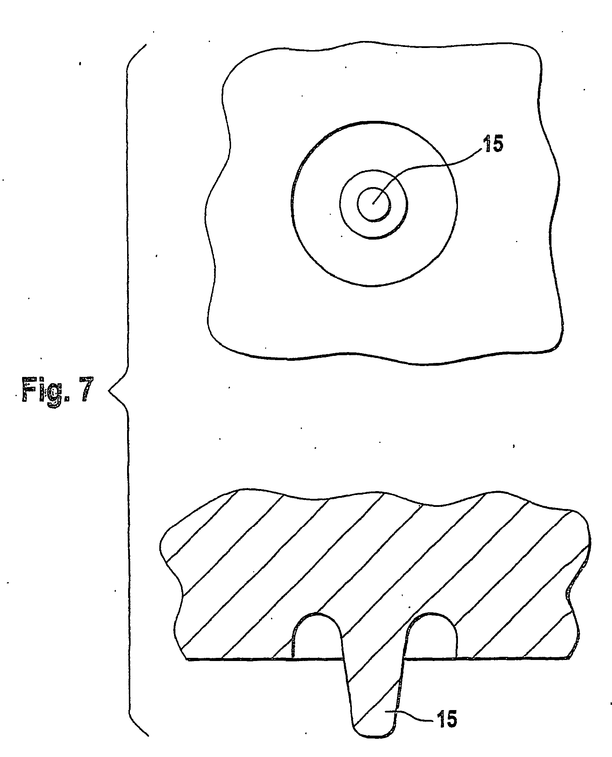

Für beide Varianten ist das Gehäuse so ausgelegt, daß es durch einfaches Verrasten der beiden Gehäusehälften 11, 12 zusammengesetzt werden kann. Hierzu sind Rastmittel 18, 19 (Fig. 1 bis 3) vorgesehen. Zur radialen Fixierung der beiden Gehäusehälften 11, 12 zueinander ist eine Anzahl von Fixierstiften 16 und zugeordneten Öffnungen 17 vorgesehen. Gemäß Fig. 7 laufen die Fixierstifte 16 jeweils leicht konisch (ca. 3- 5 Grad) zusammen. Zur axialen Fixierung der Gehäusehälften 11, 12 zueinander sind Verdrängungsnoppen 15 vorgesehen, die für einen Toleranzausgleich der beiden Gehäusehälften 11, 12 sorgen. Der Detektor ist hinsichtlich der Toleranzen so ausgelegt, daß Schmutzpartikel, die größer als 0,5 mm sind, nicht von oben oder seitlich in das Gehäuseinnere eindringen können.

Die erfindungsgemäße Detektionsvorrichtung kann in einen Fahrzeugsitz eingebaut werden. Gemäß der Norm ISO 13216-1 ("ISOFix") weist der Sitz eine Traverse zwischen Rückenlehne und Sitzfläche auf, an welcher sich ein Paar Befestigungsbügel für einen Kindersitz 200 befindet. Die erfindungsgemäße Detektionsvorrichtung ist paarweise mittels Befestigungseinrichtungen 19 ebenfalls an den Befestigungsbügeln befestigt.

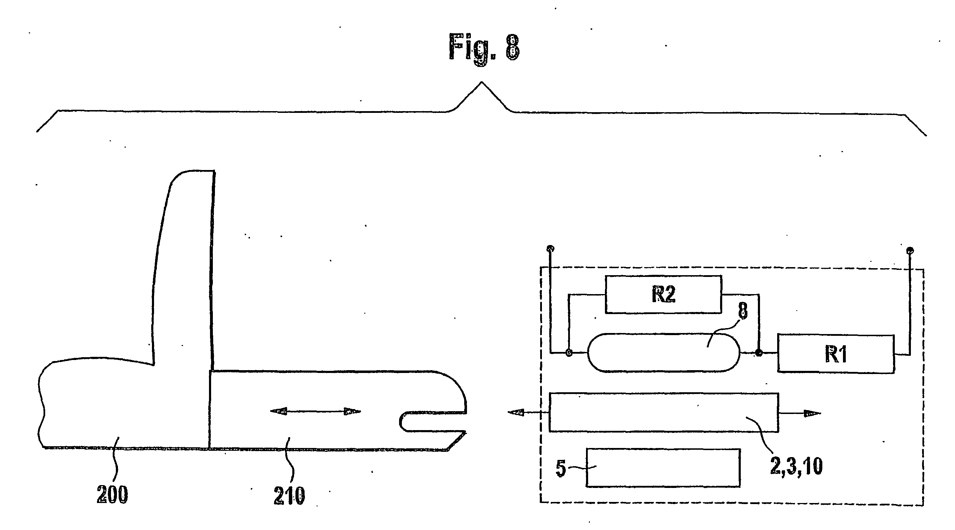

Fig. 8 faßt das Funktionsprinzip der erfindungsgemäßen Detektionsvorrichtung zusammen. Wird der Kindersitz 200 mittels eines Paares von Arretiereinrichtungen 210 in die Befestigungsbügel eingeschoben, so wird der Hebel 10 der erfindungsgemäßen Detektionsvorrichtung in die zweite Lage P2 bewegt, somit auch der übrige Teil des beweglichen Mechanismus 2, 3, so daß aufgrund der Feldänderung der Magnetschalter 8 seinen Schaltzustand ändert. Hierdurch kann ein Signal geschaltet werden, das der Airbag-Steuerung die Information gibt, die Airbag-Auslösung zu deaktivieren. Die Beschaltung des Magnetschalters 8 kann wie in der Figur durch die beiden Widerstände R1, R2 angedeutet realisiert sein.

Da die Detektionsvorrichtung paarweise vorhanden ist, kann der Detektionsvorgang redundant durchgeführt werden, wodurch die Zuverlässigkeit und damit die Sicherheit der Kindes im Kindersitz weiter erhöht wird.

Da die Detektionsvorrichtung am Befestigungsbügel für den Kindersitz 200 angebracht ist, können zusätzliche Vorkehrungen am Kindersitz und am Fahrzeugsitz entfallen, was eine besonders kostengünstige Umsetzung der Erfindung ermöglicht.

Die Beeinflussung des Magnetfelds ist nicht auf den Fall der Abschirmung beschränkt. Möglich ist eine Beeinflussung durch Materialien mit vorbestimmten anderen magnetischen Eigenschaften.

Ebenso können Hall-Sonden in den Schaltelementen 8 verwendet werden. Andere Arten von Betätigungsfeldern B umfassen elektromagnetische Felder, die dann auf entsprechende Sensoren als Schaltelemente 8 wirken. Eine Realisierung mit einer Lichtquelle funktioniert nach dem Prinzip einer Lichtschranke.

## Patentansprüche

1. Vorrichtung zur Detektion der Installation eines Kindersitzes (200), insbesondere auf einem Fahrzeugsitz (100), mit einem festen Teil (1, 11, 12) und einem beweglichen Mechanismus (2, 3), **dadurch gekennzeichnet, daβ** der feste Teil (1, 11, 12) ein Schaltelement (8) mit zwei Schaltzuständen und Mittel (5) zur Bildung eines Betätigungsfelds (B) für das Schaltelement (8) aufweist und der bewegliche Mechanismus (2, 3) durch Installation eines Kindersitzes (200) von einer ersten Lage (P1) in eine zweite Lage (P2) bewegbar ist und dadurch eine Beeinflussung des Betätigungsfelds (B) erzielbar ist, so daß das Schaltelement (8) den Schaltzustand wechselt.

2. Vorrichtung gemäß Anspruch 1, bei welcher das Betätigungsfeld (B) ein Magnetfeld und das Schaltelement (8) ein Magnetschaltelement ist.

3. Vorrichtung gemäß einem der vorherigen Ansprüche, bei welcher zur Beeinflussung des Betätigungsfeld (B) ein Abschirmmittel (3), insbesondere ein Blech aus Weicheisen, vorgesehen ist, das sich in der ersten Lage (P1) in einem Bereich (9) zwischen dem Schaltelement (8) und dem Bildungsmittel (5) befindet und sich in der zweiten Lage (P2) mindestens teilweise außerhalb des Bereichs (9) befindet.

4. Vorrichtung gemäß einem der vorherigen Ansprüche, bei welcher das Schaltelement (8) einen Reed-Schalter oder eine Hall-Sonde aufweist.

5. Vorrichtung gemäß Anspruch 1, bei welcher das Betätigungsfeld (B) ein elektromagnetisches Feld ist und das Schaltelement (8) einen Strahlungsdetektor aufweist.

6. Vorrichtung gemäß einem der vorherigen Ansprüche, bei welcher Mittel (4) zum Rückstellen des beweglichen Mechanismus (2, 3) in die erste Lage (P1) vorgesehen sind.

7. Vorrichtung gemäß einem der Ansprüche 3 bis 6, bei welcher der bewegliche Mechanismus (2, 3) am festen Teil (1, 11, 12) drehbar um einen Drehpunkt (7) gelagert ist und das Abschirmmittel (3) an dem beweglichen Mechanismus (2, 3) befestigt ist.

8. Vorrichtung gemäß einem der Ansprüche 3 bis 7, bei welcher das Abschirmmittel (3) an mindestens einer Seite (31) derart geformt ist, daß es in der ersten Lage (P1) um einen Pol (6) des Magneten (5) mindestens teilweise herumgreift.

9. Vorrichtung gemäß einem der Ansprüche 3 bis 8, bei welcher eine Flanke (32) des Abschirmmittels (3) zum Drehpunkt (7) hin abgeschrägt ist.

10. Vorrichtung gemäß einem der Ansprüche 3 bis 9, bei welcher der feste Teil (1, 11, 12) an der Unterseite einen Schmutzabfuhrschlitz (13) aufweist, in welchen das Abschirmmittel (3) mindestens teilweise eingreift.

11. Vorrichtung gemäß einem der Ansprüche 6 bis 10, bei der die Rückstellmittel (4) eine Drehfeder aufweisen, die koaxial mit dem beweglichen Mechanismus (2, 3) angeordnet ist.

12. Vorrichtung gemäß einem der Ansprüche 3 bis 6, bei welcher der bewegliche Mechanismus (2, 3) einen drehbaren Teil (2) und einen verschieblichen Teil (3) aufweist, wobei der drehbare Teil (2) drehbar um einen Drehpunkt (7) am festen Teil (1, 11, 12) gelagert ist und wobei der verschiebliche Teil das Abschirmmittel (3) aufweist und der verschiebliche Teil (3) mittels eines Nocken (21), der sich an dem drehbaren Teil (2) befindet, von der ersten Lage (P1) in die zweite Lage (P2) verschiebbar ist.

13. Vorrichtung gemäß Anspruch 6 oder 12, bei welcher die Rückstellmittel (4) eine Bügelfeder, die auf den verschieblichen Teil (3) wirkt, und/oder eine Drehfeder, die koaxial mit dem drehbaren Teil (2) angeordnet ist und auf diesen wirkt, aufweisen.

14. Vorrichtung gemäß einem der vorherigen Ansprüche, bei welcher der feste Teil (1, 11, 12) zwei Gehäusehälften (11, 12) aufweist, vorzugsweise mit einer Anzahl von Fixierstiften (16) und zugeordneten Öffnungen (17) zur radialen Fixierung der beiden Gehäusehälften (11, 12) zueinander.

15. Vorrichtung gemäß dem vorherigen Anspruch, bei welcher die beiden Gehäusehälften (11, 12) Verdrängungsnoppen (15) zum axialen Toleranzausgleich der Gehäusehälften (11, 12) zueinander aufweisen.

16. Vorrichtung gemäß einem der vorherigen Ansprüche, bei welcher das Magnetschaltelement (8) zum Schalten eines Signals für eine Airbag-Steuerung ausgelegt ist.

17. Vorrichtung gemäß einem der vorherigen Ansprüche, bei welcher der bewegliche Mechanismus (2, 3) über einen Hebel (10) durch eine Arretiereinrichtung (210) des Kindersitzes (200) bewegbar ist.

18. Vorrichtung gemäß einem der vorherigen Ansprüche, welche Mittel (19) zum Befestigen in dem Fahrzeugsitz (100) an einer Traverse (110), insbesondere gemäß ISO 13216-1 aufweist.

19. Fahrzeugsitz (100) mit mindestens einer Vorrichtung gemäß einem der vorherigen Ansprüche.

## Revendications

1. Dispositif pour détecter l'installation d'un siège pour enfant (200), en particulier sur un siège de véhicule (100), comprenant une partie fixe (1, 11, 12) et un mécanisme mobile (2, 3),
**caractérisé en ce que**
la partie fixe (1, 11, 12) présente un élément de commutation (8) avec deux états de commutation et des moyens (5) pour former un champ d'actionnement (B) pour l'élément de commutation (8), et
le mécanisme mobile (2, 3) est déplaçable suite à l'installation d'un siège pour enfant (200) d'une première position (P1) dans une deuxième position (P2) pour ainsi pouvoir obtenir une influence du champ d'actionnement (B) de telle sorte que l'élément de commutation (8) change d'état de commutation.

2. Dispositif selon la revendication 1,
dans lequel
le champ d'actionnement (B) est un champ magnétique et l'élément de commutation (8) un élément de commutation magnétique.

3. Dispositif selon l'une quelconque des revendications précédentes,
dans lequel
pour influencer le champ d'actionnement (B) un moyen de blindage (3), en particulier une tôle en fer doux, se trouve, dans la première position (P1), dans une zone (9) entre l'élément de commutation (8) et le moyen de formation (5) et dans la deuxième position (P2) du moins partiellement, à l'extérieur de la zone (9).

4. Dispositif selon l'une quelconque des revendications précédentes,
dans lequel
l'élément de commutation (8) présente un commutateur de Reed ou une sonde de Hall.

5. Dispositif selon la revendication 1,
dans lequel
le champ d'actionnement (B) est un champ magnétique et l'élément de commutation (8) présente un détecteur de rayonnement.

6. Dispositif selon l'une quelconque des revendications précédentes,
dans lequel
des moyens (4) sont prévus pour replacer le mécanisme mobile (2, 3) dans la première position (P1).

7. Dispositif selon l'une quelconque des revendications 3 à 6,
dans lequel
le mécanisme mobile (2, 3) est logé sur la partie fixe (1, 11, 12) en rotation autour d'un point de rotation (7), et le moyen de blindage (3) est fixé au mécanisme mobile (2,3).

8. Dispositif selon l'une quelconque des revendications 3 à 7,
dans lequel
le moyen de blindage (3), du moins au niveau d'un côté (31), est formé pour entourer partiellement un pôle (6) de l'aimant (5) dans la première position (P1).

9. Dispositif selon l'une quelconque des revendications 3 à 8,
dans lequel
un flanc (32) du moyen de blindage (3) est chanfreiné en direction du point de rotation (7).

10. Dispositif selon l'une quelconque des revendications 3 à 9,
dans lequel
la partie fixe (1, 11, 12) présente à sa face inférieure une fente d'évacuation des salissures (13) dans laquelle le moyen de blindage (3) est engagé partiellement.

11. Dispositif selon l'une quelconque des revendications 6 à 10,
dans lequel
les moyens de rappel (4) présentent un ressort rotatif disposé coaxialement au mécanisme mobile (2, 3).

12. Dispositif selon l'une quelconque des revendications 3 à 6,
dans lequel
le mécanisme mobile (2, 3) présente une partie rotative (2) et une partie coulissante (3), la partie rotative (2) étant logée en rotation autour d'un point de rotation (7) situé sur la partie fixe (1, 11, 12), et la partie coulissante présentant le moyen de blindage (3) et pouvant être déplacée de la première position (P1) dans la deuxième position (P2) au moyen d'une came (21) prévue sur la partie rotative (2).

13. Dispositif selon la revendication 6 ou 12,
dans lequel
les moyens de rappel (4) présentent un ressort en forme d'étrier qui agit sur la partie coulissante (3) et/ou un ressort rotatif disposé coaxialement à la partie rotative (2) et qui agit sur celle-ci.

14. Dispositif selon l'une quelconque des revendications précédentes,
dans lequel
la partie fixe (1, 11, 12) présente deux moitiés de boîtier (11 12), de préférence munies d'un nombre de boutons d'assemblage (16) et d'orifices (17) associés pour la fixation radiale l'une à l'autre des deux moitiés de boîtier (11, 12).

15. Dispositif selon la revendication précédente,
dans lequel
les deux moitiés de boîtier (11, 12) présentent des boulons de déplacement (15) pour la compensation de tolérance axiale des moitiés de boîtier (11, 12) l'une par rapport à l'autre.

16. Dispositif selon l'une quelconque des revendications précédentes,
dans lequel
l'élément de commutation magnétique (8) est conçu pour commuter un signal pour une commande d'airbag.

17. Dispositif selon l'une quelconque des revendications précédentes,
dans lequel
le mécanisme mobile (2, 3) peut être actionné par un levier (10) d'un système de blocage (210) du siège pour enfant (200).

18. Dispositif selon l'une quelconque des revendications précédentes, qui présente dans le siège pour enfants (100) des moyens (19) pour la fixation à une traverse (110), en particulier selon la norme ISO 13216-1.

19. Siège pour enfant (100) avec au moins un dispositif selon l'une quelconque des revendications précédentes.

## Claims

1. Device for detecting the fitting of a child's seat (200), in particular on a vehicle seat (100), having a fixed part (1, 11, 12) and a moveable mechanism (2, 3), **characterized in that** the fixed part (1, 11, 12) has a switching element (8) with two switched states and means (5) for forming an activation field (B) for the switching element (8), and the moveable mechanism (2, 3) can be moved from a first position (P1) into a second position (P2) by fitting a child's seat (200), and as a result the activation field (B) can be influenced so that the switching element (8) changes the switched state.

2. Device according to Claim 1, in which the activation field (B) is a magnetic field and the switching element (8) is a magnetic switching element.

3. Device according to one of the preceding claims in which, in order to influence the activation field (B) a screening means (3), in particular a sheet-metal plate made of soft iron is provided, said sheet-metal plate being located in the first position (P1) in a region (9) between the switching element (8) and the formation means (5) and in the second position (P2) at least partially outside the region (9).

4. Device according to one of the preceding claims, in which the switching element (8) has a Reed switch or a Hall probe.

5. Device according to Claim 1, in which the activation field (B) is an electromagnetic field and the switching element (8) has a beam detector.

6. Device according to one of the preceding claims, in which means (4) are provided for resetting the moveable mechanism (2, 3) into the first position (P1).

7. Device according to one of Claims 3 to 6, in which the moveable mechanism (2, 3) is mounted on the fixed part (1, 11, 12) so as to be rotatable about a centre of rotation (7), and the screening means (3) is attached to the moveable mechanism (2, 3).

8. Device according to one of Claims 3 to 7, in which the screening means (3) is shaped on at least one side (31) in such a way that in the first position (P1) it at least partially engages around a pole (6) of the magnet (5).

9. Device according to one of Claims 3 to 8, in which one edge (32) of the screening means (3) is bevelled in the direction of the centre of rotation (7).

10. Device according to one of Claims 3 to 9, in which the fixed part (1, 11, 12) has on the underside a dirt removal slot (13) into which the screening means (3) at least partially engages.

11. Device according to one of Claims 6 to 10, in which the restoring means (4) have a rotational spring which is arranged coaxially with the moveable mechanism (2, 3).

12. Device according to one of Claims 3 to 6, in which the moveable mechanism (2, 3) has a rotatable part (2) and a displaceable part (3), with the rotatable part (2) being mounted on the fixed part (1, 11, 12) so as to be rotatable about a centre of rotation (7), and with the displaceable part having the screening means (3) and the displaceable part (3) being capable of being displaced from the first position (P1) into the second position (P2) by means of a cam (21) which is located on the rotatable part (2).

13. Device according to Claim 6 or 12, in which the restoring means (4) have a clip spring which acts on the displaceable part (3) and/or a rotational spring which is arranged coaxially with the rotatable part (2) and acts on it.

14. Device according to one of the preceding claims, in which the fixed part (1, 11, 12) has two housing halves (11, 12), preferably with a number of securing pins (16) and assigned openings (17) for radially securing the two housing halves (11, 12).

15. Device according to the preceding claim, in which the two housing halves (11, 12) have displacement knobs (15) for compensating the axial tolerances of the housing halves (11, 12) with respect to one another.

16. Device according to one of the preceding claims, in which the magnetic switching element (8) is designed to switch a signal for controlling an airbag.

17. Device according to one of the preceding claims, in which the moveable mechanism (2, 3) can be moved by means of a locking device (210) of the child's seat (200) using a lever (10).

18. Device according to one of the preceding claims, which has means (19) for attachment to a crossmember (110), in particular according to ISO 13216-1, in the vehicle seat (100).

19. Vehicle seat (100) having at least one device according to one of the preceding claims.
